# EUROPEAN PATENT SPECIFICATION

(11) **EP 3 725 594 B1**
(45) Date of publication and mention of the grant of the patent: **06.03.2024**
(21) Application number: 18889165.9
(22) Date of filing: 25.10.2018
(51) Int. Cl.: B60R 16/02, B60R 16/037

(54) **VEHICLE FUNCTION BROADCASTING METHOD AND APPARATUS, AND VEHICLE-MOUNTED INTELLIGENT CONTROLLER**
VERFAHREN UND VORRICHTUNG ZUR ÜBERTRAGUNG VON FAHRZEUGFUNKTIONEN UND FAHRZEUGMONTIERTER INTELLIGENTER CONTROLLER
PROCÉDÉ ET APPAREIL DE DIFFUSION DE FONCTION DE VÉHICULE, ET DISPOSITIF DE COMMANDE INTELLIGENT MONTÉ SUR VÉHICULE

(30) Priority: 15.12.2017 CN 201711354999
(43) Date of publication of application: 21.10.2020
(73) Proprietor: NIO (Anhui) Holding Co., Ltd., Hefei City, Anhui Province (CN)
(72) Inventor: CHEN, Yingrui, Shanghai (CN); LI, Tianshu, Shanghai (CN); LI, Bin, Shanghai (CN)
(74) Representative: Vossius & Partner Patentanwälte Rechtsanwälte mbB
(86) International application number: PCT/CN2018/111864
(87) International publication number: WO 2019/114427

(56) References cited:
- EP-A1- 1 415 864
- WO-A1-2012/019620
- CN-A- 102 339 618
- CN-A- 104 442 631
- CN-A- 105 095 828
- CN-A- 107 444 294
- DE-A1-102011 111 213
- JP-A- 2002 160 588
- US-A1- 2011 039 236
- US-A1- 2017 228 947
- US-A1- 2017 301 260
- US-A1- 2017 301 260

## Description

### Technical Field

The invention relates to the technical field of vehicles, and in particular to a vehicle function broadcasting method and apparatus, and a vehicle-mounted intelligent controller.

### Background Art

With the development of vehicle technology, consumers no longer just focus on the performance of the vehicle itself, but begin to pay more and more attention to human-vehicle interaction experience during the driving process. In order to enable users to better learn and use the vehicle, it is necessary to introduce the functions of the vehicle to the user. However, the existing method mainly introduces the functions of the vehicle in the form of paper instructions, but as the users' usage habits change, they rarely take the initiative to consult paper instructions to learn the functions of the vehicle, and some functions are the ones that manufacturers want users to learn so as to improve the user experience. In such contradictory situation, the users do not have enough knowledge of the functions of the vehicle, and at the same time, the user experience becomes worse. An example of a vehicle function learning system and method according to the prior art is disclosed in DE102011111213.

Therefore, how to effectively display vehicle functions to users is a problem that those skilled in the art need to solve at present.

### Summary of the Invention

In order to solve the above-mentioned problems in the prior art, that is, in order to solve the problem of poor interactivity of vehicle introduction in the prior art, an aspect of the invention provides a vehicle function broadcasting method, comprising:
Step S1: determining whether input information is a vehicle function broadcasting instruction, and if so, implementing Step S2;
Step S2: acquiring a historical record of use of vehicle functions, and arranging the vehicle functions in a reverse order according to the frequency of use of the vehicle functions and generating a broadcasting list; and
Step S3: broadcasting the vehicle functions according to the broadcasting list.

In a preferred technical solution of the above-mentioned method, the method for "acquiring a historical record of use of vehicle functions" comprises:
acquiring a user ID; and
acquiring, based on the user ID, a historical record of use of vehicle functions that corresponds to the user.

In a preferred technical solution of the above-mentioned method, the method for "broadcasting the vehicle functions according to the broadcasting list" comprises:
broadcasting in sequence according to the broadcasting list; or
displaying the broadcasting list, and broadcasting corresponding vehicle functions according to a selection instruction input by a user.

In a preferred technical solution of the above-mentioned method, the method for "broadcasting in sequence according to the broadcasting list" comprises:
broadcasting function names in sequence according to the broadcasting list; and
after each broadcasting of a function name, broadcasting function details according to a user instruction that is input or jumping to broadcast the next function name.

In a preferred technical solution of the above-mentioned method, the method further comprises a broadcasting pause control method and/or a playing stop control method after Step S3, wherein
the broadcasting pause control method comprises: pausing broadcasting the vehicle functions after acquiring a broadcasting pause instruction entered by the user; and resuming broadcasting the vehicle functions after acquiring a broadcasting resumption instruction entered by the user; and
the broadcasting stop control method comprises: stopping broadcasting the vehicle functions after acquiring a broadcasting stop instruction entered by the user.

In a preferred technical solution of the above-mentioned method, "broadcasting the vehicle functions" comprises:
text broadcasting, and/or voice broadcasting, and/or video broadcasting.

Another aspect of the invention provides a vehicle-mounted intelligent controller, comprising:
a triggering module configured to determine whether input information is a vehicle function broadcasting instruction, and if so, executing an acquiring module;
the acquiring module configured to acquire a historical record of use of vehicle functions, and arrange the vehicle functions in a reverse order according to the frequency of use of the vehicle functions and generate a broadcasting list; and
a broadcasting module configured to broadcast the vehicle functions according to the broadcasting list.

Preferably, said acquiring, by the acquiring module, a historical record of use of vehicle functions comprises:
acquiring a user ID; and
acquiring, based on the user ID, a historical record of use of vehicle functions that corresponds to the user.

Preferably, said broadcasting, by a broadcasting module, the vehicle functions according to the broadcasting list comprises:
broadcasting in sequence according to the broadcasting list; or
displaying the broadcasting list, and broadcasting corresponding vehicle functions according to a selection instruction input by a user.

Preferably, the vehicle-mounted intelligent controller further comprises a broadcasting control module, and the broadcasting control module comprises a broadcasting pause control module and a broadcasting stop control module;
the broadcasting pause control module is configured to: pause broadcasting the vehicle functions after acquiring a broadcasting pause instruction entered by the user; and resume broadcasting the vehicle functions after acquiring a broadcasting resumption instruction entered by the user; and
the broadcasting stop control module is configured to stop broadcasting the vehicle functions after acquiring a broadcasting stop instruction entered by the user.

A third aspect of the invention provides a storage apparatus in which a plurality of programs are stored, wherein the programs are adapted to be loaded and executed by a processor to implement the above-mentioned vehicle function broadcasting method.

A fourth aspect of the invention provides a processing apparatus, comprising a processor and a storage device; the processor being adapted to execute various programs; and the storage device being adapted to store a plurality of programs, the programs are adapted to be loaded and executed by the processor to implement the above-mentioned vehicle function broadcasting method.

Compared with the closest prior art, the invention provides a vehicle function broadcasting method, comprising Step S1: determining whether input information is a vehicle function broadcasting instruction, and if so, implementing Step S2; Step S2: acquiring a historical record of use of vehicle functions, and arranging the vehicle functions in a reverse order according to the frequency of use of the vehicle functions and generating a broadcasting list; and Step S3: broadcasting the vehicle functions according to the broadcasting list.

The above technical solutions have at least the following beneficial effects: With the invention, a historical record of use of vehicle functions by a user can be acquired, and the vehicle functions less used by the user can be learned according to the historical record. When the user needs to learn the vehicle functions, the vehicle functions can be broadcast to the user in a targeted manner, which can not only make the user familiar with the vehicle, but also improve the user experience.

### Brief Description of the Drawings

Fig. 1 is a schematic flowchart of a vehicle function broadcasting method in an embodiment of the invention; and
Fig. 2 is a schematic structural diagram of a vehicle-mounted intelligent controller in an embodiment of the invention.

### Detailed Description of Embodiments

To make the objectives, technical solutions, and advantages of the embodiments of the invention clearer, the technical solutions in the embodiments of the invention will be described clearly and completely with reference to the accompanying drawings in the embodiments of the invention. Obviously, the described embodiments are only some, rather than all of the embodiments of the invention. Based on the embodiments of the invention, all other embodiments obtained by those of ordinary skills in the art without going through any creative work shall fall within the scope of protection of the invention

Preferred implementations of the invention are described below with reference to the accompanying drawings. It should be understood by those skilled in the art that these implementations are only for explaining the technical principles of the invention and are not intended to limit the scope of protection of the invention.

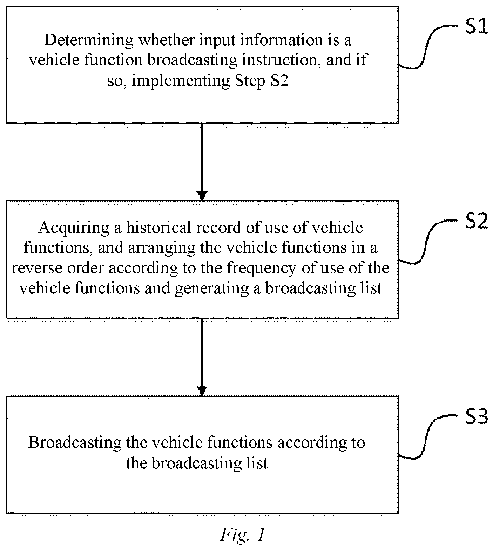

Referring to Fig. 1, Fig. 1 exemplarily shows a schematic flowchart of a vehicle function broadcasting method in this embodiment. As shown in Fig. 1, the vehicle function broadcasting method in this embodiment comprises the following steps:
Step S 1: determining whether input information is a vehicle function broadcasting instruction, and if so, implementing Step S2.

In the embodiment of the invention, the vehicle function broadcasting method runs in a vehicle-mounted intelligent controller. The vehicle-mounted intelligent controller has a rotatable head, and the head is provided with a display screen on which text and expression information can be displayed. The vehicle-mounted intelligent controller is provided inside with a voice receiving apparatus, which can be used to receive the user's voice, and the user can directly control the vehicle-mounted intelligent controller with voice, and send an instruction, to the vehicle-mounted intelligent controller, for broadcasting functions. After receiving the instruction from the user, the vehicle-mounted intelligent controller determines whether information that is input is a vehicle function broadcasting instruction, and if so, implements the next step.

According to the functional attributes of the vehicle, the functions of the vehicle are classified, including but not limited to the following types: mechanical type, navigation type, communication type and entertainment type. Among them, the mechanical type of functions may comprise opening and closing windows, adjusting seats, adjusting air conditioners, etc.; the navigation type of functions may comprise a user using the vehicle's own navigation software to navigate, etc.; the communication type of functions may comprise a user using Bluetooth to connect his/her mobile phone to the vehicle-mounted central control screen, so as to make a call through the vehicle-mounted central control screen, etc.; and the entertainment type of functions may comprise a user playing music, videos, etc. using the vehicle-mounted central control screen. In the embodiment of the invention, the vehicle-mounted intelligent controller may establish a wired or wireless connection with a plurality of sensors in the vehicle. When a user uses vehicle functions, the vehicle-mounted intelligent controller may acquire a record of use of the vehicle functions.

In a preferred embodiment of the invention, when a user requests the broadcasting of vehicle functions, the method for acquiring a historical record of use, by a user, of the vehicle functions specifically comprises the following steps:
binding a historical record of use, by a user, of the vehicle functions with a user ID; and when the user requests the broadcasting of the vehicle functions, acquiring the historical record of use of the vehicle functions that corresponds to the user ID;
In practical applications, the vehicle-mounted intelligent controller can identify the identity of a user and create an individual ID for each user. When a user enters the vehicle, the vehicle-mounted intelligent controller will identify the identity of the user and find the corresponding historical record of use of vehicle functions according to the user ID. When there are multiple users in the vehicle, the vehicle-mounted intelligent controller can identify the identities of the multiple users, and find the historical record of use of vehicle functions that corresponds to the user ID according to different user IDs.

Step S2: acquiring a historical record of use of vehicle functions, and arranging the vehicle functions in a reverse order according to the frequency of use of the vehicle functions and generating a broadcasting list; and
In the embodiment of the invention, in order to enable a user to be familiar with vehicle functions rarely used by the user when wanting to learn the rarely used functions, the vehicle functions can be broadcast to the user according to the frequency of use of the vehicle functions in a historical record of use of the vehicle functions by the user. Specifically, the frequency of use of vehicle functions in the historical record is calculated, and the broadcasting is performed according to the frequency of use. The higher the frequency, the larger the number of times the user usually uses a function, which means the user is relatively familiar with it and there is no need to broadcast same to the user; and the lower the frequency, the smaller the number of times the user uses a function or the user even never uses it. In order to enable the user to be familiar with various vehicle functions, the function with a lower frequency of use is preferentially broadcast to the user.

According to the frequency of use of vehicle functions in a historical record, the frequency of use of vehicle functions is sorted in a descending order to obtain a sorted table for the frequency of use of vehicle functions.

According to the sorted table for the frequency of use of the vehicle functions, the vehicle functions are broadcast to the user in a reverse order.

A function use record analysis platform bound to the user ID can calculate the frequency of use of the vehicle functions by the user; sort according to the frequency of use of the vehicle functions in a descending order, so as to obtain a broadcasting list of the frequency of use of the vehicle functions; and determine whether a vehicle function in the sorted table has been broadcast in a preset period, and if so, remove the function from the sorting, and if the function is the last one in the list, retain the function and recalculate the frequency of use, by the user, of the vehicle functions; and if not, the vehicle functions are broadcast to the user in a reverse order according to the sorted table for the frequency of use of the vehicle functions. When specific broadcasting is performed, the broadcasting can be performed in sequence according to the broadcasting list, or the broadcasting list is displayed on the central control screen of the vehicle, and a corresponding vehicle function can be broadcast according to an instruction from a user. The content of the broadcasting list can be displayed on the central control screen of the vehicle, and a user can select, through voice or a click operation, the function of interest according to the broadcasting list for broadcasting, thereby realizing the corresponding vehicle function broadcasting by means of the vehicle-mounted intelligent controller. In the process of broadcasting the vehicle functions, the name of the vehicle function can be broadcast first, and after the name is broadcast, the function details of the vehicle function can be resumed to be broadcast, or the next function name is jumped to according to an instruction input by the user.

In another preferred embodiment of the invention, updating the historical record of use, by the user, of the vehicle functions according to a preset time period may be further comprised.

In practical applications, a vehicle can be upgraded online. After the online upgrade, some new functions will be added to the vehicle, such as supporting the use of the vehicle for selfie, etc. However, the newly added functions are not in the original sorted table for the frequency of use of the vehicle functions or a record analysis platform. In order to allow users to experience the newly added functions, the historical record of use of the vehicle functions by the user is updated according to a preset time period, the number of times and frequency of use of the vehicle functions by the user are recalculated, and a situation in which the newly added functions are used is added to the historical record of use of the vehicle functions by the user, wherein the preset time period can be one month or three months. In addition, the preset time period can also be set according to the experience of the engineer and the requirements of the user, which is not limited here.

In a preferred implementation of the invention, when the user uses the vehicle for the first time and requests the broadcasting of vehicle functions, in order to be able to reasonably broadcast the functions to the user, a default vehicle function broadcasting list can be set in the vehicle-mounted intelligent controller and broadcast to the user according to a preset broadcasting sequence; in addition, data of an APP associated with the vehicle can be acquired before the user uses the vehicle, and the APP associated with the vehicle displays the function introduction of the vehicle, which is presented to the user in the form of a game or task, and the user can learn the function introduction of the vehicle when completing the game or task; and a background can also acquire the a data record of the user and associate same with the historical record of use of the vehicle functions, which can not only acquire a record of use, by the user, of vehicle functions, but also enable the user to learn the vehicle functions in advance in the form of a game or task, thereby enhancing the user experience.

Step S3: broadcasting the vehicle functions according to the broadcasting list.

In another preferred implementation of the invention, the method for broadcasting vehicle functions to a user comprises:
broadcasting vehicle functions to a user in the form of any one of text, voice, and video, or random combination of the three based on the central control screen of the vehicle.

In the invention, the vehicle-mounted intelligent controller can be connected to the central control screen of the vehicle in a wired or wireless manner, and when an instruction from a user is acquired to broadcast vehicle functions, the vehicle functions can be broadcast to the user in the form of any one of text, voice, and video, or random combination of the three on the central control screen. Specifically, taking broadcasting "adjusting the seat" as an example, the vehicle-mounted intelligent controller can display on the central control screen, after connecting to the control screen, a demonstration video of an operation method for adjusting the seat, to inform the user of the specific operations of adjusting the seat and the specific positions. Taking broadcasting "vehicle navigation" as an example, the vehicle-mounted intelligent controller can broadcast the specific method for vehicle navigation to the user through voice. In addition, the broadcasting can also be performed in combination with the demonstration video.

In practical applications, the broadcasting can be paused or stopped according to the needs of the user. When the user needs to talk on the phone or has other matters, the broadcasting of the vehicle functions can be paused. The user controls the vehicle-mounted intelligent controller to pause the broadcasting of the vehicle functions through voice or by clicking a corresponding key. When the user ends other matters and wants to resume to learn the vehicle functions, the vehicle-mounted intelligent controller can be controlled to resume broadcasting the vehicle functions. When the user already knows or does not want to know the vehicle function being broadcast, he/she can control the vehicle-mounted intelligent controller to stop the broadcasting of the vehicle functions through voice or by clicking a corresponding key.

In the embodiments of the invention, the central control screen in various embodiments of the present application is exemplarily a display screen of various functions such as information entertainment, navigation, weather, and mileage display or a combination thereof in the cab. In practical applications, the vehicle-mounted intelligent controller is not limited to being used only on vehicles, but can also be used in other scenarios besides vehicles. The vehicle-mounted intelligent controller can be fixedly installed at a position that the user can observe, or can be detachably installed at a position that the user can observe. A connection interface for the vehicle-mounted intelligent controller can be reserved at a position above the central control screen of the vehicle, the connection interface can be electrically or communicatively connected to the vehicle-mounted intelligent controller, and the vehicle-mounted intelligent controller can also be wirelessly connected to the vehicle, which are not limited here.

In addition, the vehicle-mounted intelligent controller can be placed in the vehicle as an independent apparatus or used in other scenarios besides vehicles. The vehicle-mounted intelligent controller may comprise a fixing apparatus, which can allow the vehicle-mounted intelligent controller to be fixed when the vehicle is traveling or the user is inconvenient to hold the vehicle-mounted intelligent controller, wherein the fixing apparatus can be provided inside with a circuit interface, which can be connected to the connection interface reserved in the vehicle. The vehicle-mounted intelligent controller can be detachably connected to the fixing apparatus, and exists independently of the fixing apparatus.

The steps of the method or algorithm described with reference to the embodiments disclosed herein may be implemented by hardware, a software module executed by a processor, or a combination of both. Software modules may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the technical field.

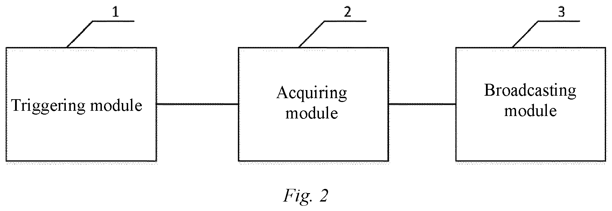

Referring to Fig. 2, Fig. 2 exemplarily shows a schematic structural diagram of a vehicle-mounted intelligent controller in this embodiment. As shown in Fig. 2, the vehicle-mounted intelligent controller in this embodiment comprises:
a triggering module 1 configured to determine whether input information is a vehicle function broadcasting instruction, and if so, executing an acquiring module 2;
the acquiring module 2 configured to acquire a historical record of use of vehicle functions, and arrange the vehicle functions in a reverse order according to the frequency of use of the vehicle functions and generate a broadcasting list; and
a broadcasting module 3 configured to broadcast the vehicle functions according to the broadcasting list.

In a preferred implementation of the invention, acquiring, by the acquiring module 2, a historical record of use of vehicle functions comprises:
acquiring a user ID; and
acquiring, based on the user ID, a historical record of use of vehicle functions that corresponds to the user.

In a preferred implementation of the invention, broadcasting, by a broadcasting module 3, the vehicle functions according to the broadcasting list comprises:
broadcasting in sequence according to the broadcasting list; or
displaying the broadcasting list, and broadcasting corresponding vehicle functions according to a selection instruction input by a user.

In a preferred implementation of the invention, the vehicle-mounted intelligent controller further comprises a broadcasting control module, and the broadcasting control module comprises a broadcasting pause control module and a broadcasting stop control module, wherein
the broadcasting pause control module is configured to: pause broadcasting the vehicle functions after acquiring a broadcasting pause instruction entered by the user; and resume broadcasting the vehicle functions after acquiring a broadcasting resumption instruction entered by the user; and
the broadcasting stop control module is configured to stop broadcasting the vehicle functions after acquiring a broadcasting stop instruction entered by the user.

It will be clearly understood by those skilled in the art that for the convenience and brevity of the description, for the specific working process and related description of the vehicle-mounted intelligent controller in the embodiments of the invention, reference may be made to the corresponding process in the afore-mentioned embodiments of the vehicle function broadcasting method, and it has the same beneficial effects as the above-mentioned vehicle function broadcasting method, and will not be repeated here.

The invention further provides a storage apparatus in which a plurality of programs are stored, wherein the programs are adapted to be loaded and executed by a processor to implement the above-mentioned vehicle function broadcasting method.

It will be clearly understood by those skilled in the art that for the convenience and brevity of the description, for the specific working process and related description of the storage apparatus in the embodiments of the invention, reference may be made to the corresponding process in the afore-mentioned embodiments of the vehicle function broadcasting method, and it has the same beneficial effects as the above-mentioned vehicle function broadcasting method, and will not be repeated here.

The invention further provides a processing apparatus, comprising a processor and a storage device; the processor being adapted to execute various programs; and the storage device being adapted to store a plurality of programs, wherein the programs are adapted to be loaded and executed by the processor to implement the above-mentioned vehicle function broadcasting method.

It will be clearly understood by those skilled in the art that for the convenience and brevity of the description, for the specific working process and related description of the processing apparatus in the embodiments of the invention, reference may be made to the corresponding process in the afore-mentioned embodiment of the vehicle function broadcasting method, and it has the same beneficial effects as the above-mentioned vehicle function broadcasting method, and will not be repeated here.

Those skilled in the art should be able to realize that the method steps of the various examples described with reference to the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention.

Heretofore, the technical solutions of the invention have been described with reference to the preferred implementations shown in the accompanying drawings; however, those skilled in the art can readily understand that the scope of protection of the invention is obviously not limited to these particular implementations. Without departing from the principle of the invention, those skilled in the art may make equivalent modifications or substitutions to related technical features, and the technical solutions after these modifications or substitutions shall fall within the scope of protection of the invention.

## Claims

1. A vehicle function broadcasting method, **characterized by** comprising:
Step S 1: determining whether input information is a vehicle function broadcasting instruction, and if so, implementing Step S2;
Step S2: acquiring a historical record of use of vehicle functions, and arranging the vehicle functions in a reverse order according to the frequency of use of the vehicle functions and generating a broadcasting list; and
Step S3: broadcasting the vehicle functions according to the broadcasting list.

2. The method according to claim 1, **characterized in that** the method for "acquiring a historical record of use of vehicle functions" comprises:
acquiring a user ID; and
acquiring, based on the user ID, a historical record of use of vehicle functions that corresponds to the user.

3. The method according to claim 1, **characterized in that** the method for "broadcasting the vehicle functions according to the broadcasting list" comprises:
broadcasting in sequence according to the broadcasting list; or
displaying the broadcasting list, and broadcasting corresponding vehicle functions according to a selection instruction input by a user.

4. The method according to claim 3, **characterized in that** the method for "broadcasting in sequence according to the broadcasting list" comprises:
broadcasting function names in sequence according to the broadcasting list; and
after each broadcasting of a function name, broadcasting function details according to a user instruction that is input or jumping to broadcast the next function name.

5. The method according to any one of claims 1-4, **characterized in that** the method further comprises a broadcasting pause control method and/or a playing stop control method after Step S3, wherein
the broadcasting pause control method comprises: pausing broadcasting the vehicle functions after acquiring a broadcasting pause instruction entered by the user; and resuming broadcasting the vehicle functions after acquiring a broadcasting resumption instruction entered by the user; and
the broadcasting stop control method comprises: stopping broadcasting the vehicle functions after acquiring a broadcasting stop instruction entered by the user.

6. The method according to claim 5, **characterized in that** "broadcasting the vehicle functions" comprises:
text broadcasting, and/or voice broadcasting, and/or video broadcasting.

7. A vehicle-mounted intelligent controller, **characterized by** comprising:
a triggering module (1) configured to determine whether input information is a vehicle function broadcasting instruction, and if so, executing an acquiring module;
the acquiring module (2) configured to acquire a historical record of use of vehicle functions, and arrange the vehicle functions in a reverse order according to the frequency of use of the vehicle functions and generate a broadcasting list; and
a broadcasting module (3) configured to broadcast the vehicle functions according to the broadcasting list.

8. The vehicle-mounted intelligent controller according to claim 7, **characterized in that** said acquiring, by the acquiring module, a historical record of use of vehicle functions comprises:
acquiring a user ID; and
acquiring, based on the user ID, a historical record of use of vehicle functions that corresponds to the user.

9. The vehicle-mounted intelligent controller according to claim 7, **characterized in that** said broadcasting, by a broadcasting module, the vehicle functions according to the broadcasting list comprises:
broadcasting in sequence according to the broadcasting list; or
displaying the broadcasting list, and broadcasting corresponding vehicle functions according to a selection instruction input by a user.

10. The vehicle-mounted intelligent controller according to any one of claims 7-9, **characterized in that** the vehicle-mounted intelligent controller further comprises a broadcasting control module, and the broadcasting control module comprises a broadcasting pause control module and a broadcasting stop control module, wherein
the broadcasting pause control module is configured to: pause broadcasting the vehicle functions after acquiring a broadcasting pause instruction entered by the user; and resume broadcasting the vehicle functions after acquiring a broadcasting resumption instruction entered by the user; and
the broadcasting stop control module is configured to stop broadcasting the vehicle functions after acquiring a broadcasting stop instruction entered by the user.

11. A storage device in which a plurality of programs are stored, **characterized in that** the programs are adapted to be loaded and executed by the processing apparatus of claim 12 to implement the vehicle function broadcasting method according to any one of claims 1 to 6.

12. A processing apparatus, comprising input means, output means, a processor and a storage device; the processor being adapted to execute various programs; and the storage device being adapted to store a plurality of programs, **characterized in that** the programs are adapted to be loaded and executed by the processor to implement the vehicle function broadcasting method according to any one of claims 1 to 6.

## Patentansprüche

1. Verfahren zur Übertragung von Fahrzeugfunktionen, **dadurch gekennzeichnet, dass** es Folgendes aufweist:
Schritt S1: Bestimmen, ob es sich bei den Eingabeinformationen um eine Übertragungsanweisung von Fahrzeugfunktionen handelt, und wenn ja, Ausführen von Schritt S2;
Schritt S2: Erfassen einer historischen Aufzeichnung der Verwendung von Fahrzeugfunktionen und Ordnen der Fahrzeugfunktionen in umgekehrter Reihenfolge gemäß der Häufigkeit der Verwendung der Fahrzeugfunktionen und Erzeugen einer Übertragungsliste; und
Schritt S3: Übertragen der Fahrzeugfunktionen gemäß der Übertragungsliste.

2. Verfahren gemäß Anspruch 1, **dadurch gekennzeichnet, dass** das Verfahren zum "Erfassen einer historischen Aufzeichnung der Verwendung von Fahrzeugfunktionen" aufweist:
Erfassen einer Benutzerkennung; und
Erfassen, basierend auf der Benutzerkennung, einer historische Aufzeichnung der Verwendung von Fahrzeugfunktionen, die dem Benutzer entspricht.

3. Verfahren gemäß Anspruch 1, **dadurch gekennzeichnet, dass** das Verfahren zum "Übertragen der Fahrzeugfunktionen gemäß der Übertragungsliste" aufweist:
Übertragen in der Reihenfolge der Übertragungsliste; oder
Anzeigen der Übertragungsliste und Übertragen entsprechender Fahrzeugfunktionen gemäß einer durch einen Benutzer eingegebenen Auswahlanweisung.

4. Verfahren gemäß Anspruch 3, **dadurch gekennzeichnet, dass** das Verfahren zum "Übertragen in der Reihenfolge der Übertragungsliste" aufweist:
Übertragen von Funktionsnamen in der Reihenfolge der Übertragungsliste; und
nach jeder Übertragung eines Funktionsnamens Übertragen von Funktionsdetails gemäß einer eingegebenen Benutzeranweisung oder Springen zum Übertragen des nächsten Funktionsnamens.

5. Verfahren gemäß einem der Ansprüche 1 bis 4, **dadurch gekennzeichnet, dass** das Verfahren ferner ein Steuerungsverfahren zum Pausieren der Übertragung und/oder ein Steuerungsverfahren zum Anhalten der Wiedergabe nach Schritt S3 aufweist, wobei
das Steuerungsverfahren zum Pausieren der Übertragung aufweist: Pausieren des Übertragens der Fahrzeugfunktionen nach dem Erfassen einer durch den Benutzer eingegebenen Anweisung zum Pausieren der Übertragung; und Fortsetzen des Übertragens der Fahrzeugfunktionen nach dem Erfassen einer durch den Benutzer eingegebenen Anweisung zum Fortsetzen der Übertragung; und
das Steuerungsverfahren zum Anhalten der Übertragung aufweist: Anhalten der Übertragung der Fahrzeugfunktionen nach Erfassen einer durch den Benutzer eingegebenen Anweisung zum Anhalten der Übertragung.

6. Verfahren gemäß Anspruch 5, **dadurch gekennzeichnet, dass** das "Übertragen der Fahrzeugfunktionen" aufweist:
Text-Übertragung und/oder Sprach-Übertragung und/oder Video-Übertragung.

7. Fahrzeugmontierte intelligente Steuervorrichtung, **dadurch gekennzeichnet, dass** sie Folgendes aufweist:
ein Auslösemodul (1), das dazu ausgelegt ist, zu bestimmen, ob Eingabeinformationen eine Anweisung zum Übertragen von Fahrzeugfunktionen sind, und wenn ja, ein Erfassungsmodul auszuführen;
das Erfassungsmodul (2), das dazu ausgelegt ist, eine historische Aufzeichnung der Verwendung von Fahrzeugfunktionen zu erfassen und die Fahrzeugfunktionen in umgekehrter Reihenfolge der Häufigkeit der Verwendung der Fahrzeugfunktionen zu ordnen und eine Übertragungsliste zu erzeugen; und
ein Übertragungsmodul (3), das dazu ausgelegt ist, die Fahrzeugfunktionen gemäß der Übertragungsliste zu übertragen.

8. Fahrzeugmontierte intelligente Steuervorrichtung gemäß Anspruch 7, **dadurch gekennzeichnet, dass** das Erfassen einer historischen Aufzeichnung der Verwendung von Fahrzeugfunktionen durch das Erfassungsmodul aufweist:
Erfassen einer Benutzerkennung; und
Erfassen, basierend auf der Benutzerkennung, einer historischen Aufzeichnung der Verwendung von Fahrzeugfunktionen, die dem Benutzer entspricht.

9. Fahrzeugmontierte intelligente Steuervorrichtung gemäß Anspruch 7, **dadurch gekennzeichnet, dass** das Übertragen der Fahrzeugfunktionen gemäß der Übertragungsliste durch ein Übertragungsmodul aufweist:
Übertragen in der Reihenfolge der Übertragungsliste; oder
Anzeigen der Übertragungsliste und Übertragen entsprechender Fahrzeugfunktionen gemäß einer durch einen Benutzer eingegebenen Auswahlanweisung.

10. Fahrzeugmontierte intelligente Steuervorrichtung gemäß einem der Ansprüche 7 bis 9, **dadurch gekennzeichnet, dass** die fahrzeugmontierte intelligente Steuervorrichtung ferner ein Übertragungssteuermodul aufweist und das Übertragungssteuermodul ein Steuermodul zum Pausieren der Übertragung und ein Steuermodul zum Anhalten der Übertragung aufweist, wobei
das Steuermodul zum Pausieren der Überragung dazu ausgelegt ist: das Übertragen der Fahrzeugfunktionen zu pausieren, nachdem eine durch den Benutzer eingegebene Anweisung um Pausieren der Übertragung erfasst wurde; und das Übertragen der Fahrzeugfunktionen fortzusetzen, nachdem eine durch den Benutzer eingegebene Anweisung zum Fortsetzen der Übertragung erfasst wurde; und
das Steuermodul zum Anhalten der Übertragung dazu ausgelegt ist, die Übertragung der Fahrzeugfunktionen nach Erfassen einer durch den Benutzer eingegebenen Anweisung zum Anhalten der Übertragung anzuhalten.

11. Speichervorrichtung, in der eine Vielzahl von Programmen gespeichert ist, **dadurch gekennzeichnet, dass** die Programme dazu eingerichtet sind, durch die Verarbeitungsvorrichtung gemäß Anspruch 12 geladen und ausgeführt zu werden, um das Verfahren zum Übertragen von Fahrzeugfunktionen gemäß einem der Ansprüche 1 bis 6 zu implementieren.

12. Verarbeitungsvorrichtung, aufweisend ein Eingabemittel, ein Ausgabemittel, einen Prozessor und eine Speichervorrichtung; wobei der Prozessor dazu eingerichtet ist, verschiedene Programme auszuführen; und die Speichervorrichtung dazu eingerichtet ist, eine Vielzahl von Programmen zu speichern, **dadurch gekennzeichnet, dass** die Programme dazu eingerichtet sind, durch den Prozessor geladen und ausgeführt zu werden, um das Verfahren zum Übertragen von Fahrzeugfunktionen gemäß einem der Ansprüche 1 bis 6 zu implementieren.

## Revendications

1. Procédé de diffusion de fonction de véhicule, **caractérisé en ce qu'**il comprend :
Étape S1 : le fait de déterminer si des informations d'entrée sont une instruction de diffusion de fonction de véhicule, et si tel est le cas, de mettre en œuvre l'Étape S2 ;
Étape S2 : le fait d'acquérir un historique d'utilisation de fonctions de véhicule, et d'agencer les fonctions de véhicule dans un ordre inverse selon la fréquence d'utilisation des fonctions de véhicule et de générer une liste de diffusion ; et
Étape 3 : le fait de diffuser les fonctions de véhicule selon la liste de diffusion.

2. Procédé selon la revendication 1, **caractérisé en ce que** le procédé pour « acquérir un historique d'utilisation de fonctions de véhicule » comprend :
le fait d'acquérir un identifiant d'utilisateur ; et
le fait d'acquérir, sur la base de l'ID d'utilisateur, un historique d'utilisation de fonctions de véhicule qui correspond à l'utilisateur.

3. Procédé selon la revendication 1, **caractérisé en ce que** le procédé pour « diffuser les fonctions de véhicule selon la liste de diffusion » comprend :
le fait de diffuser par ordre selon la liste de diffusion ; ou
le fait d'afficher la liste de diffusion, et de diffuser des fonctions de véhicule correspondantes selon une instruction de sélection entrée par un utilisateur.

4. Procédé selon la revendication 3, **caractérisé en ce que** le procédé pour « diffuser par ordre selon la liste de diffusion » comprend :
le fait de diffuser des noms de fonction par ordre selon la liste de diffusion ; et
après chaque diffusion d'un nom de fonction, le fait de diffuser des renseignements de fonction selon une instruction d'utilisateur qui est entrée ou de sauter pour diffuser le nom de fonction suivant.

5. Procédé selon l'une quelconque des revendications 1 à 4, **caractérisé en ce que** le procédé comprend en outre un procédé de commande de pause de diffusion et/ou un procédé de commande d'arrêt de lecture après l'Étape S3,
le procédé de commande de pause de diffusion comprenant : le fait de mettre en pause la diffusion des fonctions de véhicule après l'acquisition d'une instruction de pause de diffusion entrée par l'utilisateur ; et le fait de reprendre la diffusion des fonctions de véhicule après l'acquisition d'une instruction de reprise de diffusion entrée par l'utilisateur ; et
le procédé de commande d'arrêt de diffusion comprenant : le fait de d'arrêter la diffusion des fonctions de véhicule après l'acquisition d'une instruction d'arrêt de diffusion entrée par l'utilisateur.

6. Procédé selon la revendication 5, **caractérisé en ce que** « le fait de diffuser les fonctions de véhicule » comprend :
la diffusion de texte, et/ou la diffusion de voix, et/ou la diffusion de vidéo.

7. Dispositif de commande intelligent monté sur véhicule, **caractérisé en ce qu'**il comprend :
un module de déclenchement (1) configuré pour déterminer si des informations d'entrée sont une instruction de diffusion de fonction de véhicule, et si tel est le cas, exécuter un module d'acquisition ;
le module d'acquisition (2) configuré pour acquérir un historique d'utilisation de fonctions de véhicule, et agencer les fonctions de véhicule dans un ordre inverse selon la fréquence d'utilisation des fonctions de véhicule et générer une liste de diffusion ; et
un module de diffusion (3) configuré pour diffuser les fonctions de véhicule selon la liste de diffusion.

8. Dispositif de commande intelligent monté sur véhicule selon la revendication 7, **caractérisé en ce que** ladite acquisition, par le module d'acquisition, d'un historique d'utilisation de fonctions de véhicule comprend :
le fait d'acquérir un identifiant d'utilisateur ; et
le fait d'acquérir, sur la base de l'ID d'utilisateur, un historique d'utilisation de fonctions de véhicule qui correspond à l'utilisateur.

9. Dispositif de commande intelligent monté sur véhicule selon la revendication 7, **caractérisé en ce que** ladite diffusion, par un module de diffusion, des fonctions de véhicule selon la liste de diffusion comprend :
le fait de diffuser par ordre selon la liste de diffusion ; ou
le fait d'afficher la liste de diffusion, et de diffuser des fonctions de véhicule correspondantes selon une instruction de sélection entrée par un utilisateur.

10. Dispositif de commande intelligent monté sur véhicule selon l'une quelconque des revendications 7 à 9, **caractérisé en ce que** le dispositif de commande intelligent monté sur véhicule comprend en outre un module de commande de diffusion, et le module de commande de diffusion comprend un module de commande de pause de diffusion et un module de commande d'arrêt de diffusion,
le module de commande de pause de diffusion étant configuré pour : mettre en pause la diffusion des fonctions de véhicule après l'acquisition d'une instruction de pause de diffusion entrée par l'utilisateur ; et reprendre la diffusion des fonctions de véhicule après l'acquisition d'une instruction de reprise de diffusion entrée par l'utilisateur ; et
le module de commande d'arrêt de diffusion étant configuré pour arrêter la diffusion des fonctions de véhicule après l'acquisition d'une instruction d'arrêt de diffusion entrée par l'utilisateur.

11. Dispositif de stockage dans lequel une pluralité de programmes sont stockés, **caractérisé en ce que** les programmes sont conçus pour être chargés et exécutés par l'appareil de traitement selon la revendication 12 afin de mettre en œuvre le procédé de diffusion de fonction de véhicule selon l'une quelconque des revendications 1 à 6.

12. Appareil de traitement, comprenant des moyens d'entrée, des moyens de sortie, un processeur et un dispositif de stockage ; le processeur étant conçu pour exécuter divers programmes ; et le dispositif de stockage étant conçu pour stocker une pluralité de programmes, **caractérisé en ce que** les programmes sont conçus pour être chargés et exécutés par le processeur pour mettre en œuvre le procédé de diffusion de fonction de véhicule selon l'une quelconque des revendications 1 à 6.
